(19) Europäisches Patentamt
European Patent Office
Office européen des brevets

(11) Veröffentlichungsnummer: **0 293 622 B1**

# (12) EUROPÄISCHE PATENTSCHRIFT

(45) Veröffentlichungstag der Patentschrift: **17.07.91**

(51) Int. Cl.5: **C09C 1/02**, C08K 3/24, C04B 33/13

(21) Anmeldenummer: **88107215.1**

(22) Anmeldetag: **05.05.88**

## (54) Verfahren zur Herstellung von Bariumsulfat mit chemoreaktiver Oberfläche.

(30) Priorität: **30.05.87 DE 3718277**

(43) Veröffentlichungstag der Anmeldung: **07.12.88 Patentblatt 88/49**

(45) Bekanntmachung des Hinweises auf die Patenterteilung: **17.07.91 Patentblatt 91/29**

(84) Benannte Vertragsstaaten: **AT BE CH DE ES FR GB GR IT LI LU NL SE**

(56) Entgegenhaltungen:
**EP-A- 0 011 752**
**DE-A- 1 717 096**
**GB-A- 466 216**
**US-A- 2 081 835**

**CHEMICAL ABSTRACTS, Band 100, Nr. 16, April 1984, Seite 87, Zusammenfassung Nr. 122840c, Columbus, Ohio, US; & JP-A-58 120 520 (SAKAI CHEMICAL INDUSTRY CO., LTD) 18-07-1983**

**WORLD SURFACE COATINGS ABSTRACTS, Band 59, Nr. 523, Januar 1986, Seiten 1-10, Zusammenfassung Nr. 86/00026, Oxford, GB; & JP-B-85 028 766 (ONAHAMA SAKAI KAGAKU CO.)**

(73) Patentinhaber: **METALLGESELLSCHAFT AG**
**Reuterweg 14 Postfach 3724**
**W-6000 Frankfurt/M.1(DE)**

(72) Erfinder: **Aderhold, Clemens, Dr.**
**Lerchenfeldstrasse 21**
**W-4150 Krefeld 1(DE)**
Erfinder: **Röhrborn, Hans-Joachim, Dr.**
**Terniepenweg 88**
**W-4133 Neukirchen-Vluyn(DE)**

EP 0 293 622 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von gefälltem Bariumsulfat mit chemoreaktiver Oberfläche.

Gefälltes Bariumsulfat ist ein bekanntes Pigment, das beispielsweise als Füllstoff in der Kautschukindustrie, für Kunstdruck- und Photopapiere in der Kunststoffindustrie zur Opazifizierung, in der Textilindustrie als Weiß-Appretur, ferner zur Mattierung von Spinnfasern verwendet wird. Bariumsulfat wird in bekannter Weise naßchemisch durch Fällung aus wasserlöslichen Bariumsalzen und wasserlöslichen Sulfaten oder Schwefelsäure hergestellt. Diese üblichen Fällungen sind zeitlich mehr oder minder ausgedehnte Kristallisationen aus isotherm übersättigten Lösungen. Wegen der sehr geringen Löslichkeit der Präzipitate sind die Kristalle sehr klein und der Umsatz liegt praktisch immer bei 100 %. Pigmente und Extender erreichen ihre maximalen anwendungstechnischen Eigenschaften bei bestimmten Korngroßenverteilungen. Es reicht daher keineswegs aus, den gewünschten Bariumsulfat-Niederschlag in einer vorgeschriebenen chemischen Zusammensetzung auszufallen, vielmehr muß der naßchemische Prozeß in solcher Weise gesteuert werden, daß die gewünschte Primärkorngröße entsteht.

Gefälltes Bariumsulfat wird in vielen Anwendungsgebieten als inertes Pigment eingesetzt. Bekannte Anwendungsbereiche sind beispielsweise der Einsatzt des gefällten Bariumsulfats als Füllstoff in der Farben- und Lackindustrie, in der Kunststoff-, Kautschuk- und Gummiindustrie oder die Verwendung als Mattierungsmittel bei der Spinnfaserherstellung. In diesen Anwendungsgebieten dient das Bariumsulfat im wesentlichen als inerter, weißer Füllstoff, d.h. seine chemisch und physikalisch weitgehend inerten Eigenschaften werden genutzt. Es gibt aber auch Anwendungen, in denen der "Füllstoff" funktionelle Eigenschaften haben soll, d.h. er soll dem System, in dem er eingesetzt wird, ein bestimmtes Eigenschaftsprofil erteilen. Dies wird im allgemeinen mit sogenannten aktiven Füllstoffen erreicht, wie Silikaten, Oxiden, Ruß, Schwefel, die sowohl natürlichen, d.h. mineralischen Ursprungs sein können, die aber auch synthetisch hergestellt werden können.

Charakteristisch für alle sogenannten aktiven Füllstoffe ist dabei eine Oberflächenreaktivität aufgrund von veresterbaren Hydroxylgruppen, reduzierbaren Carbonyl-bzw. Carboxylgruppen oder radikalisch spaltbaren Molekülketten (Polysulfide).

Diese Oberflächenreaktivität fehlt am Bariumsulfat. Das Zentralatom im $(SO_4)^{2-}$-Tetraeder liegt in der höchsten Oxidationsstufe vor. Die hohe Ladungsdichte des $Ba^{2+}$-Ions gewährleistet seine Absättigung an der Kristalloberfläche.

Eine bekannte Maßnahme, die Nachbehandlung mit anorganischen und/oder organischen Hilfsstoffen, wie die Silanisierung, führt beim Bariumsulfat nicht zum gewünschten Erfolg, weil im Gegensatz zu den oxidischen Pigmenten, wie $TiO_2$, ZnO und $SiO_2$, bzw. zum Kohlenstoff auf der Oberfläche des $BaSO_4$ Korns keine veresterbaren bzw. komplexierbaren Oberflächenzentren vorhanden sind und eine Fixierung der Nachbehandlungskomponenten im Sinne einer kovalenten Bindung nicht stattfinden kann.

Eine rein physikalisch-mechanische Applikation, z.B. das Aufbringen von Zusatzkomponenten durch einfaches Zumischen, hat nicht die gewünschte Wirkung. Meist wird bei der Einarbeitung von gecoatetem Bariumsulfat in ein Polymersystem die physisorptiv gebundene Nachbehandlungskomponente von der Oberfläche abgelöst.

Um das Wiederablösen zu verhindern, muß daher die Nachbehandlungskomponente chemisch, d.h. kovalent oder elektrostatisch auf der $BaSO_4$-Oberfläche fixiert sein.

Aus DE-OS 28 50 609 sind stabile Füllstoff/Polyol-Dispersionen bekannt, wobei der Füllstoff ein Copräzipitat aus Bariumsulfat und Kieselsäure ist. Das Copräzipitat hat eine mittlere Teilchengröße von 70 µm.

Die aus DE-OS 17 17 096 bekannten phosphathaltigen Pigmente werden durch gemeinsame Fällung gewonnen, wobei einer Bariumionen enthaltenden Lösung Sulfationen und Hydrogenphosphationen zugeführt werden. Die Fällung erfolgt bei Temperaturen von 0 bis 100° C.

Aus DE-OS 33 47 191 ist ein Verfahren zur Herstellung eines oberflächenbehandelten Bariumsulfats mit verbesserter Dispergierfähigkeit in Harzmassen bekannt. Im vorbekannten Verfahren wird eine wäßrige Lösung eines Alkalisilikates zu einer wäßrigen Aufschlämmung von Bariumsulfat zugegeben, welche überschüssige Bariumionen enthält. Hierbei wird Bariumsilikat auf der Oberfläche des Bariumsulfats niedergeschlagen. Anschließend wird mit Mineralsäure zur Zersetzung des Bariumsilikats zu wasserhaltigem bzw. hydratisiertem Siliziumdioxid behandelt. Das Produkt kann noch anschließend mit einem Silankupplungsmittel behandelt werden.

Der Erfindung liegt die Aufgabe zugrunde, ein Verfahren zur Herstellung von gefälltem Bariumsulfat mit chemoraktiven Eigenschaften anzugeben, wobei das Bariumsulfat seinem jeweiligen Verwendungszweck als funktioneller Füllstoff angepaßt werden kann.

Die der Erfindung zugrundeliegende Aufgabe wird dadurch gelöst, daß als wasserlösliche Verbindungen Alkyl- und Arylsulfonate, Alkyl- und Arylsulfate oder Alkyl- und Arylphosphorsäureester, wobei der Alkyl- oder Arylrest ggfs. durch funktionelle Gruppen teilweise substituiert sein kann, oder perfluorierte Alkyl- oder Arylsulfonate, Monofluorphosphate, Wolframate oder Thiosulfate eingesetzt werden.

Es wurde gefunden, daß beim Ausfällen von Bariumsulfat in Gegenwart von Anionen, die mit Bariumionen schwer lösliche Verbindungen bilden, ein Produkt erhalten wird, das die Fremdionen entweder homogen über den Kristall verteilt oder an der Oberfläche angereichert enthält. Je nach Ladungsdichte und Molekülgröße der Anionen- bzw. Dotierungskomponenten werden Fehlstellen im $BaSO_4$-Kristallgitter besetzt bzw. Gitterplätze in statistischer Verteilung eingenommen oder es erfolgt mit langen apolaren Molekülresten eine Abschirmung der Oberflächenladung (Hydrophobierung). Das erfindungsgemäße Verfahren kann beispielsweise mit folgenden organischen, wasserlöslichen Verbindungen durchgeführt werden: Natriumdodecylbenzolsulfonat, Natriumlaurylsulfat, Natriumcetylsulfat, Phosphorsäuremonoethylmonobenzylester, Lithiumperfluoroctansulfonat. Als organische Verbindungen, die mit funktionellen Gruppen substituierte Alkyl- oder Arylreste tragen, eignen sich solche mit Halogen, Hydroxyl-, Amino-, Imino-oder Mercapto-Gruppen, oder einer endständigen Doppelbindung, beispielsweise 12-Brom-1-dodecansulfonsäure, Natrium-10-hydroxy-1-decansulfonat, Natrium-Carrageenan, Natrium-10-mercapto-1-Cetansulfonat, Natrium-16-Ceten(1)-sulfat.

In dem erfindungsgemäßen Verfahren zur Herstellung von chemoreaktivem Bariumsulfat werden als Anionen wasserlöslicher, anorganischer Verbindungen (andere anorganische Verbindungen als Sulfate), Monofluorphosphate, Wolframate oder Thiosulfate eingesetzt. Geeignete Verbindungen sind beispielsweise Natrium-Thiosulfat ($Na_2S_2O_3$ . $5H_2O$), Lithiumhexafluorsilikat ($Li_2(SiF_6)$ . $2H_2O$), Natriumfluorophosphat ($Na_2PO_3F$) und Natriumpolywolframat ($3Na_2WO_4$ . 9 $WO_3$ . $H_2O$).

Nach einer bevorzugten Ausgestaltung der Erfindung werden die Verbindungen in einer Menge von 0,1 bis 50 Gew.-%, bezogen auf das zu fällende Bariumsulfat, eingesetzt. Vorzugsweise wird die zusätzliche Komponente in einer Menge von 1 bis 10 Gew.-% eingesetzt.

Die nach dem erfindungsgemäßen Verfahren hergestellten chemoraktiven Bariumsulfat-Pigmente können eine für den vorgesehenen Verwendungszweck geeignete Nachbehandlung erfahren.

Sind der Bariumsulfatoberfläche z.B. durch die Dotierungskomponenten saure bzw. veresterbare Hydroxylgruppen, wie

$$-\overset{|}{\underset{|}{Si}}-OH,\quad O=\overset{|}{\underset{|}{P}}-OH \text{ oder } -\overset{|}{\underset{|}{Ti}}-OH,$$

aufgeprägt oder befinden sich in der Kristallitoberfläche neben den $(SO_4)^{2-}$-Anionen durch Copräzipitation eingebrachte, andere chemisch umsetzbare Gruppen, wie $S^{2-}$, $SH^-$ oder $F^-$ , so kann dieses $BaSO_4$-Pigment mit geeigneten Nachbehandlungskomponenten bzw. Kupplungsmitteln für das jeweilige Einsatzgebiet ausgerüstet werden. Ein im allgemeinen eingesetzter Haftvermittler bzw. Kupplungsmittel sind organofunktionelle Alkoxysilane, wie Vinyltrimethoxysilan. Es werden aber auch Alkoxytitanate, -zirkonate oder -aluminate eingesetzt. Das Aufbringen des Haftvermittlers erfolgt auf an sich bekannte Weise. Er kann in einem Lösungsmittel gelöst auf das Pigment aufgebracht werden, wobei das Lösungsmittel abgezogen und der Feststoff getrocknet wird. Oder die Belegung erfolgt bei flüssigen Haftvermittlern durch Verdüsen des Mittels auf das im Mischbett bewegte Pigmentpulver.

Dem nach dem Verfahren der Erfindung hergestellten chemoreaktiven Bariumsulfat-Pigment wird eine definierte Funktionalität aufgeprägt, die eine kovalente Wechselwirkung zwischen dem Pigment bzw. den Feststoffpartikeln und z.B. der Polymermatrix eines Reaktivharzes bzw. von Polyolefinen herzustellen vermag. Durch Einbindung des nach dem Verfahren der Erfindung hergestellten chemoreaktiven Bariumsulfats in ein organisches Polymer oder organisches System werden diesem im Sinne eines Verbundwerkstoffes definierte mechanische, optische und thermische Festkörpereigenschaften übertragen.

Somit betrifft die Erfindung des weiteren die Verwendung des nach dem Verfahren der Erfindung hergestellten Bariumsulfats mit chemoreaktiver Oberfläche als aktive feindisperse Festkörperkomponente in natürlichen oder synthetischen Elastomeren, thermoplastischen und duroplastischen Kunststoffen und keramischen Massen.

Beispielsweise liegt in der Regel der thermische Ausdehnungskoeffizient von Polymeren um Zehnerpotenzen über dem von anorganischen Festkörpern. Je nach Art der Wechselwirkung zwischen Pigment und der Polymermatrix resultiert für den Verbund ein Ausdehnungskoeffizient, der entweder - unabhängig von der Feststoffkonzentration - dem des reinen Polymeren nahekommt (keine Haftung). Oder die Dilatation des Verbundes sinkt mit steigendem Füllgrad auf den Wert eines Festkörpers (starke Anbindung). Analoges gilt

für den Elastizitätsmodul. In Abhängigkeit von der Partikelgroße und Morphologie eines chemoreaktiven Pigmentes lassen sich Polymersysteme, wie Coats oder Verbundwerkstoffe, opak oder transparent einstellen, ohne die Anbindung des Polymeren auch unter mechanischer Beanspruchung (Verstreckung) zu beeinträchtigen.

Die Vorteile des erfindungsgemaßen Verfahrens sind darin zu sehen, daß in ebenso einfacher wie wirtschaftlicher Weise Bariumsulfat in chemoreaktiver, gefällter Form herzustellen ist. Die Oberflächenreaktivität wird in gezielter Weise im Hinblick auf den spateren Verwendungszweck des Bariumsulfat-Pigments eingestellt, wobei der Bereich der Oberflächenreaktivität von praktisch chemisch inert (unbehandelt) bis zur vollständigen Belegung der Oberfläche des $BaSO_4$-Pigments mit reaktiven Zentren reicht.

Die Erfindung wird anhand der nachstehenden Beispiele näher und beispielhaft erläutert.

Beispiel 1

In einer Fällzelle wurden unter Rühren eine $BaCl_2$-Lösung mit einer $Na_2SO_4$-Lösung, in der pro Liter $Na_2SO_4$-Lösung 2,5 g Na-laurylsulfat ($C_{12}H_{25}OSO_3Na$) gelöst waren, zur Reaktion gebracht. Es wurden 325 ml/min $BaCl_2$-Lösung der Dichte 1.050 g/ml und 110 ml/min $Na_2SO_4$-Lösung der Dichte 1.104 g/ml durchgesetzt. Das gefällte $BaSO_4$ wurde filtriert, mehrmals mit Wasser gewaschen bis zu einer Leitfähigkeit der Suspension von 100 $\mu$S/cm und sodann bei 110 °C getrocknet. Die Kohlenstoffbestimmung des trockenen Produktes fand einen Kohlenstoffgehalt von 0,32 %.

Das Produkt ist in Lacken und Kunststoffen deutlich besser zu dispergieren als ein reines Bariumsulfat vergleichbarer Korngröße. Als Test auf den Dispergierzustand des erfindungsgemaß hergestellten Materials wurde das Kontrastverhältnis über schwarzem und weißem Untergrund in einem Transparentlack gewählt.

Lackansatze auf der Basis eines Fettsäure-modifizierten Alkydharzes (Alftalat AC 451 der Fa. Hoechst AG)/Melaminharzes (Luwipal 012 der Fa. BASF AG) mit einer Fullstoffvolumenkonzentration von 4,4 % werden drei Stunden unter identischen Bedingungen dispergiert. Danach waren die Grindometerwerte (Hegman) der Mahlpasten nach DIN 53 203 kleiner 7 $\mu$m. Das Kontrastverhältnis der Lackaufzuge (100 $\mu$m und 20 $\mu$m Naßschichtdicke) auf transparenten Tragerfolien wurde über schwarz-weißen Aluminiumtafeln bestimmt, während die Lackaufzüge auf den schwarz-weißen Kontrastkartons (200 $\mu$m Naßschichtdicke) direkt vermessen wurden. Das Kontrastverhältnis KV ist definiert als

$$KV = \frac{\text{Remission mit Y-Filter über schwarzem Untergrund}}{\text{Remission mit Y-Filter über weißem Untergrund}} \cdot 100$$

Die Transparenz des hydrophobierten Produktes aus Beispiel 1 übertrifft deutlich ein reines, gefälltes Bariumsulfat mit vergleichbarer BET-Oberfläche (Tabelle 1).

Tabelle 1:

Kontrastverhältnisse (KV) im Prüfsystem AC 451 / Luwipal 012

| Pigment | BET ($m^2/g$) | PVK (%) | KV (Folie/ 100/u) | KV (Karton/ 200/u) |
|---|---|---|---|---|
| ohne | - | - | 3,22 | 0,92 |
| Blancfixe F | 3,2 | 4,4 | 15,57 | 2,74 |
| Beispiel 1 | 3,6 | 4,4 | 9,03 | 1,61 |

Beispiel 2

In einer Fällapparatur wurden $Na_2SO_4$ und $BaCl_2$ im Molverhältnis 1 : 0,97 als wässrige Lösungen unter Rühren zur Reaktion gebracht. In der $Na_2SO_4$-Lösung (Dichte 1,104 g/ml) befanden sich 1,35 g $Li_2SiF_6.2 H_2O$ pro Liter gelöst. Das weiße Produkt wurde von der Mutterlauge abgetrennt und mehrmals mit kaltem Wasser gewaschen, bis sich in einer 10%igen Suspension eine elektrische Leitfähigkeit von 280 (µS/cm) einstellt. Nach der Trocknung bei 115 °C sind in dem pulverförmigen Bariumsulfat 0,42 % $SiF_6$ nachzuweisen.

Eingesetzt in einem Reaktivharz läßt sich mit dem Produkt aus Beispiel 3 die Klebfestigkeit einer Metallfügung steigern, insbesondere aber auch die Haftung des Klebstoffs auf den Fügeteilen deutlich verbessern.

Das modifizierte $BaSO_4$ und ein unbehandeltes Bariumsulfat mit mittleren Korngrößen von 0,22 µm wurden in dem Epoxidharz (Beckopox(R) EP 128 der Fa. Hoechst AG) aufdispergiert bis zur Grindometereinheit (DIN 53 203) unter 5 µm. Der Füllgrad des Klebstoffsystems mit Härter (Beckopox(R)-Spezialhärter EM 654 der Fa. Hoechst AG) betrug jeweils 15 Gew.-%. Die Prüfungen der Festigkeit von Metallfügungen erfolgte in Anlehnung an DIN 53 283 und DIN 53 282; die Prüfbleche bestanden aber aus 99,5%igem Reinaluminium.

Tabelle 3:

Prüfergebnisse im System EP 128 / EH 654 (100 : 50)

| Pigment | Füllgrad | Klebfestigkeit $N/mm^2$ | Schälwiderstand N/mm | Anriß-Schälwiderstand N/mm |
|---|---|---|---|---|
| - | - | 9,60 | 0,40 | 2,26 |
| $BaSO_4$ unbeh. | 15% | 9,30 | 0,46 | 2,31 |
| Beispiel 3 | 15% | 15,87 | 0,82 | 3,94 |
| Schwerspat | 40% | 9,73 | 0,30 | 1,99 |

Abgesehen von der höheren Klebfestigkeit und dem höheren Schälwiderstand (Tabelle 3) konnten an den gerissenen Blechen aus dem Zugscherversuch mit dem modifizierten $BaSO_4$ als Pigment nur reine Kohäsionsbrüche festgestellt werden. Das Versagen der Fugung erfolgte also in der Polymerschicht und nicht durch Enthaftung der Klebschicht auf dem metallischen Substrat, wie es in 80 % der Zugscher- und Winkelschälprüfungen mit unbehandeltem $BaSO_4$ bzw. mit Schwerspat als feindispersem Festkörper der Fall ist.

Beispiel 3

Eine gemäß Beispiel 1 hergestellte Fällsuspension mit einem Feststoffgehalt von 250 g $BaSO_4$ - (hydrophobiert) wurde mit Wasser mehrmals gewaschen, bis eine Leitfähigkeit von 100 µS/cm erhalten wurde, und dann filtriert. Der Filterkuchen mit einer Feststoffkonzentration von 60 % wurde viermal mit je 1,5 1 Isopropanol angeschlämmt und gewaschen. Die abfiltrierte Isopropanolpaste wurde mit 1,5 1 Xylol angeschlämmt, 10 Minuten bei Raumtemperatur gerührt und abfiltriert. Nach viermaligem Waschen mit je 0,5 1 Xylol waren im letzten Filtrat IR-spektroskopisch keine Alkoholbanden mehr nachzuweisen. Das Endprodukt, eine zähe, wachsartige Paste mit einem Feststoffgehalt von ca. 45 %, konnte ohne weiteren Dispergieraufwand in organische Bindemittelsysteme eingemischt werden.

Anwendungstechnisch geprüft wurde der Einfluß des Produktes aus Beispiel 5 auf die Bodensatzbildung eines weißen Einbrennlackes auf der Basis Alkyd/Melaminharz mit Hombitan(R) R 510 (Fa. Sachtleben) als $TiO_2$-Weißpigment. Bei der Bodensatzprüfung wurden nach 10 Tagen die Höhe des Sediments und dessen Konsistenz bestimmt und mit einer Note zwischen 1 und 9, d.h. zwischen sehr leichter Bodensatzbildung bis zu sehr starker Bodensatzbildung bewertet. Die Basisrezeptur ohne Bariumsulfatpigment schnitt mit der Note 3 ab. Wurden 2 Gew.-% des Weißpigmentes R 510 durch unbehandeltes Bariumsulfat ersetzt, verschlechterte sich die Bewertung der Bodensatzbildung des Systems auf die Note 7. Ein entsprechender Austausch durch das Produkt aus Beispiel 5 erhielt in der Bodensatzbeurteilung die Note 2. Zudem zeichnete sich der Lackaufzug mit dem Produkt aus Beispiel 5 durch eine sehr gute Glanzhaltung aus.

**Patentansprüche**

1. Verfahren zur Herstellung von Bariumsulfat mit chemoreaktiver Oberfläche durch Fällung von Bariumionen mittels Sulfationen in wäßrigem Medium, bei dem die Ausfällung (Copräzipitation) in Gegenwart von zusätzlichen, mit Bariumionen präzipitierbaren und schwer lösliche Bariumverbindungen bildenden Anionen wasserlöslicher Verbindungen durchgeführt wird, dadurch gekennzeichnet, daß als wasserlösliche Verbindungen Alkyl- und Arylsulfonate, Alkyl- und Arylsulfate oder Alkyl- und Arylphosphorsäureester, wobei der Alkyl- oder Arylrest ggfs. durch funktionelle Gruppen teilweise substituiert sein kann, oder perfluorierte Alkyl- oder Arylsulfonate, Hexafluorsilikate, Monofluorphosphate, Wolframate oder Thiosulfate eingesetzt werden.

2. Verfahren nach Anspruch 1, dadurch gekennzeichnet, daß die Verbindung, die eine zusätzliche schwer lösliche Bariumverbindung bildet, in einer Menge von 0,1 bis 50, vorzugsweise 1 bis 10 Gew.-%, auf Bariumsulfat bezogen, eingesetzt wird.

3. Verfahren nach Anspruch 1 oder 2, dadurch gekennzeichnet, daß die Verbindung, die eine zusätzliche schwer lösliche Bariumverbindung bildet, der verwendeten Sulfationenlösung zugesetzt wird.

4. Verfahren nach einem der Ansprüche 1 bis 3, dadurch gekennzeichnet, daß das abgetrennte und getrocknete Copräzipitat mit Silanderivaten oder Siloxanen nachbehandelt wird.

5. Verwendung des nach dem Verfahren der Ansprüche 1 - 4 hergestellten Bariumsulfats mit chemoreaktiver Oberfläche als aktive feindisperse Festkörperkomponente in natürlichen oder synthetischen Elastomeren, thermoplastischen und duroplastischen Kunststoffen und keramischen Massen.

## Claims

1. Process for preparing barium sulphate with a chemically reactive surface by precipitation of barium ions by means of sulphate ions in aqueous medium, in which the precipitation (co-precipitation) is carried out in the presence of additional anions of water-soluble compounds, which anions can be precipitated with barium ions and which form poorly soluble barium compounds, characterised in that alkyl and aryl sulphonates, alkyl and aryl sulphates or alkyl and aryl phosphoric acid esters, wherein the alkyl or aryl radical may optionally be partially substituted by functional groups, or perfluorinated alkyl or aryl sulphonates, hexafluorosilicates, monofluorophosphates, tungstates or thiosulphates are used as the water-soluble compounds.

2. Process according to Claim 1, characterised in that the compound which forms an additional poorly soluble barium compound is used in a quantity of 0.1 to 50, preferably 1 to 10% by weight, relative to barium sulphate.

3. Process according to Claim 1 or 2, characterised in that the compound which forms an additional poorly soluble barium compound is added to the sulphate ion solution used.

4. Process according to one of Claims 1 to 3, characterised in that the separated and dried co-precipitate is subsequently treated with silane derivatives or siloxanes.

5. Use of the barium sulphate with a chemically reactive surface prepared according to the process of Claims 1 to 4 as an active, finely dispersed solids constituent in natural or synthetic elastomers, thermoplastics and duroplastics and ceramic substances.

## Revendications

1. Procédé de préparation de sulfate de baryum chimiquement réactif en surface, par précipitation d'ions baryum au moyen d'ions sulfate en milieu aqueux, qui consiste à effectuer la précipitation (coprécipitation) en présence d'anions supplémentaires de composés hydrosolubles qui forment, avec des ions baryum, des composés de baryum qui peuvent précipiter et qui sont peu solubles, caractérisé en ce qu'il consiste à utiliser comme composés hydrosolubles des sulfonates d'alcoyle, des sulfonates d'aryle, des sulfates d'alcoyle, des sulfates d'aryle, des phosphates d'alcoyle ou des phosphates d'aryle, le radical alcoyle ou aryle pouvant être substitué en partie éventuellement par des groupes fonctionnels, ou des alcoylsulfonates perfluorés, des arylsulfonates perfluorés, des hexafluorosilicates, des monofluorophosphates, des tungstanates ou des thiosulfates.

2. Procédé suivant la revendication 1, caractérisé en ce qu'il consiste à utiliser le composé qui forme un composé supplémentaire de baryum peu soluble en une quantité représentant de 0,1 à 50 et, de préférence, de 1 à 10 % du poids du sulfate de baryum.

3. Procédé suivant la revendication 1 ou 2, caractérisé en ce qu'il consiste à ajouter à la solution d'ions sulfate utilisée le composé qui forme un composé de baryum supplémentaire peu soluble.

4. Procédé suivant l'une des revendications 1 à 3, caractérisé en ce qu'il consiste à faire subir un traitement ultérieur par des dérivés de silane ou de siloxane au coprécipité séparé et séché.

5. Utilisation du sulfate de baryum préparé par le procédé des revendications 1 à 4, chimiquement réactif en surface, comme constituant solide actif et à l'état finement dispersé, dans des élastomères naturels ou synthétiques, dans des matières plastiques, thermoplastiques ou thermodurcissables et dans des compositions céramiques.